(19) Europäisches Patentamt
European Patent Office
Office européen des brevets

(11) Veröffentlichungsnummer: **0 009 616**
**B1**

# (12) EUROPÄISCHE PATENTSCHRIFT

(45) Veröffentlichungstag der Patentschrift: **27.01.82**

(51) Int. Cl.³: **A 01 N 47/06** // (A01N47/06, 43/70)

(21) Anmeldenummer: **79103174.3**

(22) Anmeldetag: **28.08.79**

(54) **Herbizides Mittel und Verfahren zur Bekämpfung von Unkräutern.**

(30) Priorität: **29.09.78 AT 7031/78**

(43) Veröffentlichungstag der Anmeldung: **16.04.80 Patentblatt 80/8**

(45) Bekanntmachung des Hinweises auf die Patenterteilung: **27.01.82 Patentblatt 82/4**

(84) Benannte Vertragsstaaten: **AT BE CH DE FR GB IT NL SE**

(56) Entgegenhaltungen:
**FR-A-1 536 475**
**FR-A-2 234 296**

(73) Patentinhaber: **CHEMIE LINZ AKTIENGESELLSCHAFT, St. Peter-Strasse 25, A-4020 Linz (AT)**

(84) Benannte Vertragsstaaten: **BE CH FR GB IT NL SE AT**

(73) Patentinhaber: **Lentia Gesellschaft mit beschränkter Haftung, Schwanthalerstrasse 39 Postfach 20 16 26, D-8000 München 2 (DE)**

(84) Benannte Vertragsstaaten: **DE**

(72) Erfinder: **Wittmann, Erwin, Dr., Lustenauerstrasse 8, A-4020 Linz (AT)**
Erfinder: **Diskus, Alfred, Dr., Dornacherstrasse 6, A-4045 Linz (AT)**
Erfinder: **Auer, Engelbert, Haltestellenweg 19a, A-4060 Leonding (AT)**

**EP 0 009 616 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Herbizides Mittel und Verfahren zur Bekämpfung von Unkräutern

Die Erfindung betrifft eine neue herbizide Wirkstoffkombination, die aus einem bereits bekannten Phenylpyridazinderivat und dem ebenfalls bereits bekannten 2-{[4-Chlor-6-(äthylamino)-s-triazin-2-yl]amino}-2-methylpropionitril besteht und eine besonders hohe selektive und synergistische Wirkung bei der Unkrautbekämpfung besitzt sowie einem Verfahren zur Bekämpfung von Unkräutern, insbesondere von schwer bekämpfbaren Unkräutern in wachsenden Getreidekulturen.

Es ist bekannt (AT-PS 326 409), daß Phenylpyridazine der allgemeinen Formel

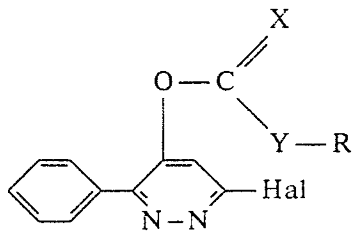

(I)

in der Hal ein Chlor- oder Bromatom, R einen geradkettigen oder verzweigten Alkylrest mit 1 bis 18 C-Atomen oder den Phenylrest, X ein Sauerstoff- oder Schwefelatom und Y ein Schwefelatom bedeutet, wobei im Falle, daß X ein S-Atom ist, Y auch Sauerstoff sein kann, herbizide Eigenschaften aufweisen und sich für viele Nutzpflanzen, unter anderem Getreidekulturen, durch eine gute Verträglichkeit auszeichnen.

Insbesonders die Verbindung O-[3-Phenyl-6-chlor-pyridazinyl-(4)]-S-(n-octyl)-thiocarbonat hat sich als Mittel zur Bekämpfung von Unkräutern in Getreide- und Maiskulturen bewährt (Diskus et al., Proc. 9th British Weed Control Conf. 1976, Vol. 2, Seite 717).

Die Phenylpyridazine gemäß obiger Formel erfassen ein breites Spektrum an Unkräutern. Bei der praktischen Anwendung im Freiland zeigte sich allerdings, daß einige Unkrautarten, wie z. B. Anthemis arvensis (Ackerhundskamille) und Stellaria media (Vogelmiere) relativ hohe Wirkstoffdosierungen für eine wirksame Bekämpfung erfordern. Dies ist insbesonders dann der Fall, wenn die Unkräuter sich in einem fortgeschrittenen Entwicklungszustand befinden. So hat vielfach zum Zeitpunkt der Herbizidspritzung Galium aparine bereits Seitentriebe entwickelt, Stellaria media befindet sich in der Regel im Stadium kurz vor der Blüte und auch Anthemis arvensis hat meist schon mehr als 10 echte Blätter ausgebildet. Unter diesen Bedingungen sind für eine ausreichende Bekämpfung der Unkräuter höhere Dosierungen notwendig als bei Modellversuchen im Gewächshaus.

Es ist ferner aus der AT-PS 271 087 bekannt, daß die Verbindung 2-{[4-Chlor-6-(äthylamino)-s-triazin-2-yl]amino}-2-methylpropionitril (»Cyanazine«) in Getreidekulturen im Nachauflaufverfahren als Herbizid dienen kann. Die Dosierung muß allerdings relativ niedrig gehalten werden (0,25 bis 0,5 kg Wirkstoff/ha), da höhere Mengen auch die Nutzpflanzen schädigen. In diesen geringen Dosierungen werden einige Unkrautarten, insbesonders Galium aparine (Klettenlabkraut), eines der wirtschaftlich bedeutsamsten Unkräuter in Getreidekulturen, nicht oder unzureichend erfaßt.

Es konnte nun gefunden werden, daß Mischungen von Wirkstoffen aus der Gruppe der Phenylpyridazine der Formel I, insbesonders der Verbindung O-[3-Phenyl-6-chlor-pyridazinyl-(4)]-S-(n-octyl)-thiocarbonat mit dem Wirkstoff 2-{[4-Chlor-6-(äthylamino)-s-triazin-2-yl]amino}-2-methyl-propionitril (»Cyanazine«), einen herbiziden Wirkungsgrad ergeben, der erheblich über jenem Wirkungsgrad liegt, der sich aus der Summe der Wirkungen beider Einzelkomponenten erwarten ließe. Es handelt sich um eine Potenzierung der herbiziden Eigenschaften im Sinne eines Synergismus. Dieser synergistische Effekt bei Mischung der angeführten Wirkstoffe war keineswegs vorherzusehen und muß als ausgesprochen überraschend angesehen werden.

Gegenstand der vorliegenden Erfindung ist demnach ein herbizides Mittel, dadurch gekennzeichnet, daß es als aktive Bestandteile eine oder mehrere Verbindungen der allgemeinen Formel

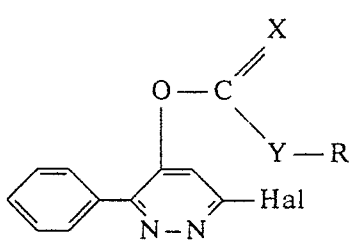

(I)

in der Hal ein Chlor- oder Bromatom, R einen geradkettigen oder verzweigten Alkylrest mit 1 bis 18 C-Atomen oder den Phenylrest, X ein Sauerstoff- oder Schwefelatom und Y ein Schwefelatom

bedeutet, wobei im Falle, daß X ein S-Atom ist, Y auch Sauerstoff sein kann, in Mischung mit der Verbindung 2-{[4-Chlor-6-(äthylamino)-s-triazin-2-yl]amino}-2-methyl-propionitril enthält.

Durch diesen, über eine lediglich additive Wirkung hinausgehenden, gesteigerten herbiziden Wirkungsgrad dieser Wirkstoffmischungen ergeben sich erhebliche technische Vorteile. Einerseits ist es damit möglich, die Aufwandmengen der Einzelkomponenten pro behandelter Fläche erheblich zu senken, andererseits können Unkräuter, wie z. B. Anthemis arvensis, die mit keiner der beiden Wirkstofftypen bislang im Freiland hinreichend bekämpfbar waren, wesentlich besser erfaßt werden als bisher.

Unter den Verbindungen der Formel I geben die Verbindungen O-[3-Phenyl-6-chlor-pyridazinyl-(4)]-S-(n-propyl)-thiocarbonat, O-[3-Phenyl-6-chlor-pyridazinyl-(4)]-S-(n-butyl)-thiocarbonat, O-[3-Phenyl-6-brom-pyridazinyl-(4)]-S-(n-butyl)-thiocarbonat, O-[3-Phenyl-6-chlor-pyridazinyl-(4)]-S-(n-dodecyl)-thiocarbonat in Kombination mit Cyanazine sehr günstige Ergebnisse. Besonders bevorzugt ist die Kombination von O-[3-Phenyl-6-chlor-pyridazinyl-(4)]-S-(n-octyl)-thiocarbonat (»Pyridate«) und Cyanazine.

Die erfindungsgemäße Wirkstoffkombination kann in die üblichen Formulierungen übergeführt werden, wie Lösungen, Emulsionen, Dispersionen, Pulver, Pasten und Granulate. Diese werden in bekannter Weise hergestellt, z. B. durch Vermischen der Wirkstoff mit Streckmitteln, also flüssigen Lösungsmitteln und/oder festen Trägerstoffen, gegebenenfalls unter Verwendung von oberflächenaktiven Mitteln, also Emulgiermitteln und/oder Netz- und Dispergiermitteln. Für die besonders geeigneten Spritzpulverformulierungen kommen als Füll- und Trägerstoffe im wesentlichen in Frage: Gesteinsmehle wie Kaoline, Tonerden, Talkum, Kreiden und synthetisch hergestellte hochdisperse Kieselsäuren. Als Netz- und Dispergiermittel eigenen sich ionogene und nicht ionogene Tenside wie Na-Dialkylarylsulfonate, Na-Alkylarylsulfonate, Na-Alkylsulfate, Na-Alkylarylsulfate, Polyoxyäthylenverbindungen; Na-oleylmethyltaurid, Na-Salze von Phenolsulfonsäurekondensationsprodukten, Na-Alkylnaphthalinsulfonate-Formaldehydkondensationsprodukte und Ligninsulfitablaugepulver.

Die erfindungsgemäße Wirkstoffkombination kann z. B. nach folgender Rezeptur als Spritzpulver formuliert werden:

| | |
|---|---|
| Wirkstoff nach Formel I | 12—45% |
| Cyanazine | 3—20% |
| Netz- und Dispergiermittel | 5—15% |
| inerte Füll- und Trägerstoffe | ad 100 |

Diese Formulierung wird zur Anwendung in Wasser suspendiert. Sie kann auch andere bekannte Wirkstoffe, wie Herbizide, Fungizide und Wachstumsregulatoren enthalten.

Die Anwendung der erfindungsgemäßen Kombination als herbizides Mittel ist in einer Reihe von Kulturen, wie z. B. Getreide- oder Maiskulturen, möglich. Die Anwendung erfolgt im Nachauflaufverfahren.

Die Aufwandmengen der Wirkstoffkombination können in einem gewissen Bereich variiert werden. Sie hängen ab von der Zusammensetzung der Wirkstoffkombination und der Art der Verunkrautung. Üblicherweise wird der Wirkstoff der allgemeinen Formel I in einer Aufwandmenge von 0,25 bis 1,5 kg/ha und der Wirkstoff Cyanazine in einer Aufwandmenge von 0,1 bis 0,4 kg/ha gegeben.

Besonders bevorzugt ist die Anwendung der erfindungsgemäßen Mittel in Getreidekulturen, wobei der Wirkstoff der Formel I in einer Aufwandmenge von 0,5 bis 1,5 kg/ha und der Wirkstoff Cyanazine in einer Aufwandmenge von 0,1 bis 0,4 kg/ha gegeben wird. Wird der Wirkstoff O-[3-Phenyl-6-chlor-pyridazinyl-(4)]-S-(n-octyl)-thiocarbonat in Kombination mit Cyanazine verwendet, so sollte er zweckmäßigerweise bei einer Aufwandmenge von 0,5 kg/ha mit mindestens 0,3 kg/ha Cyanazine kombiniert werden, um eine ausreichende Bekämpfung der 3 Unkrautarten Galium aparine, Stellaria media und Anthemis arvensis zu erzielen.

Besonders günstig ist eine Aufwandmenge von 0,75 kg/ha des Wirkstoffes O-[3-Phenyl-6-chlor-pyridazinyl-(6)]-S-(n-octyl)-thiocarbonat in Kombination mit 0,3 kg/ha Cyanazine, wodurch der herbizide Wirkungsgrad im Falle von Galium aparine und Stellaria media bereits 100% erreicht und auch die Wirkung gegen Anthemis arvensis bereits voll befriedigt.

Wählt man hingegen den Wirkstoff O-[3-Phenyl-6-chlor-pyridazinyl-(4)]-S-(n-octyl)-thiocarbonat in einer Aufwandmenge von 1 kg/ha, so genügen schon 0,2 kg/ha Cyanazine, um alle 3 Unkräuter sehr gut bis ausgezeichnet zu vernichten. Wird die Aufwandmenge von O-[3-Phenyl-6-chlor-pyridazinyl-(4)]-S-(n-octyl)-thiocarbonat auf 1,5 kg/ha erhöht, so genügen bereits 0,1 kg/ha Cyanazine, um einen deutlichen synergistischen Effekt, z. B. bei Anthemis arvensis, zu bewirken.

Besonders günstig ist bei der Bekämpfung in Getreidekulturen eine Aufwandmenge von 1 kg/ha O-[3-Phenyl-6-chlor-pyridazinyl-(4)]-S-(n-octyl)-thiocarbonat und von 0,2 bis 0,3 kg/ha Cyanazine.

Die synergistische Wirkung der Wirkstoffmischungen wird in den folgenden Beispielen dargelegt. Zur Berechnung eines synergistischen Effektes wurde davon ausgegangen, daß ein rein additiver Effekt sich nach folgender Formel errechnet:

$$E = X + Y - \frac{X \cdot Y}{100}$$

(nach Limpel, L. E., P. H. Schuldt, D. Lamont, 1962, Weed control by dimethyl tetrachloroterephthalate alone and in certain combinations, Proc. NEWCC 16 : 48 — 53, basierend auf Gowing, D. P. 1960, Comments on tests of herbicide mixtures, Weeds 8 : 379—391.

E = der (bei additiver Wirkung) zu erwartende herbizide Wirkungsgrad (% Unkrautvernichtung) nach Anwendung von A+B bei p+q kg Aufwand/ha,
X = Wirkungsgrad (%) bei Anwendung des Wirkstoffes A mit p kg/ha,
Y = Wirkungsgrad (%) bei Anwendung des Wirkstoffes B mit q kg/ha.

Liegt der experimentell gefundene Wert über dem gemäß vorliegender Formel errechneten Wert, so liegt ein Synergismus vor, liegt der Wert darunter, ist ein Antagonismus gegeben.

Aus den Ergebnissen der Tabellen 1 bis 3 geht deutlich hervor, daß in fast allen Fällen bei Kombination der Wirkstoffe I+II der herbizide Wirkungsgrad (% Abtötung) erheblich über den bei rein additiver Wirkung zu erwartenden (errechneten) Werten liegt.

Der praktische Nutzen eines Synergismus in dem hier aufgezeigten Ausmaß ist außerordentlich hoch. Wie bekannt, basiert das E.W.R.C.-Bewertungsschema für den herbiziden Wirkungsgrad auf einer angenäherten exponentiellen Funktion zwischen dem Wirkungsgrad (% Abtötung) und der jeweiligen Wertzahl (bzw. Benotung) in der Art, daß im praktischen Bereich zwischen 85 und 100% Abtötung wesentlich differenzierter benotet wird, als im wirtschaftlich uninteressanten Bereich zwischen 0 und 85% Abtötung (siehe Tabelle 4).

Eine Anhebung des Wirkungsgrades im oberen Bereich ist daher wesentlich bedeutsamer als im unteren Bereich. Eine Verbesserung des Wirkungsgrades von z. B. 95% auf 100% (+5%) kommt einer Verbesserung um zwei Bonitierungsnoten gleich, wogegen eine Anhebung des Wirkungsgrades z. B. von 70% auf 80% (+10%) lediglich einer Notenstufe entspricht und überdies praktisch wenig Bedeutung hat (sowohl 70% als auch 80% Abtötung gelten noch als nicht ausreichend).

Wie aus dem Beispiel 4 ersichtlich, sind aber insbesonders im Bereich zwischen 85% und 100% Abtötung in allen Fällen synergistische Wirkungssteigerungen in einem wirtschaftlich bedeutsamen Ausmaß festzustellen.

## Beispiel 1

In einem Mischer werden 82 g Cyanazine, 20 g Na-Dialkylarylsulfonat, 40 g Na-Oleylmethyltaurid, 48 g Champagnekreide und 410 g hochdisperse Kieselsäure vorgelegt und 5 Minuten lang gemischt. Anschließend werden unter intensivem Mischen innerhalb von 20 Minuten 400 g Pyridate zufließen gelassen. Nach dem Eintragen wird noch 5—10 Minuten lang weiter gemischt und anschließend in einer geeigneten Mühle gemahlen. Die so erhaltene Mischung wird zur Anwendung in Wasser suspendiert und auf die Kulturen verspritzt.

## Beispiel 2

In einem Mischer werden 376 g hochdisperse Kieselsäure vorgelegt. Unter intensivem Mischen werden innerhalb von 20 Minuten 357 g Pyridate eingedüst und anschließend mit 147 g Cyanazine, 50 g Na-Laurylsulfat, 50 g Na-Salz von Phenolsulfonsäurekondensationsprodukten und 20 g Champagnekreise versetzt und 10 Minuten lang gemischt. Schließlich wird die Formulierung in einer geeigneten Mühle gemahlen. Die so erhaltene Mischung wird zur Anwendung in Wasser suspendiert und auf die Kulturen verspritzt.

## Beispiel 3

In einem Mischer werden auf 334 g hochdisperse Kieselsäure innerhalb von 15 bis 20 Minuten 334 g Pyridate aufgedüst. Zu diesem 50%igen Vorkonzentrat werden 103 g Cyanazine, 40 g Na-Dodecylbenzolsulfonat, 30 g Na-Ligninsulfonat, 29 g hochdisperse Kieselsäure und 130 g Champagnekreide zugesetzt, innig vermischt und anschließend in einer Mühle gemahlen. Die so erhaltene Mischung wird zur Anwendung in Wasser suspendiert und auf die Kulturen versprüht.

In analoger Weise können Mischungen von Cyanazine mit

O-[3-Phenyl-6-chlor-pyridazinyl-(4)]-S-(n-propyl)-thiocarbonat,
O-[3-Phenyl-6-chlor-pyridazinyl-(4)]-S-(n-butyl)-thiocarbonat,
O-[3-Phenyl-6-brom-pyridazinyl-(4)]-S-(n-butyl)-thiocarbonat,
O-[3-Phenyl-6-chlor-pyridazinyl-(4)]-S-(n-dodecyl)-thiocarbonat

formuliert werden.

## Beispiel 4

Auf einer Freilandversuchsfläche wurden die Unkräuter

Anthemis arvensis (Ackerhundskamille)
Galium aparine (Klettenlabkraut)
Stellaria media (Vogelmiere)

nach Arten getrennt ausgesät.

Nachdem die Unkräuter aufgelaufen waren und sich in jenem Entwicklungszustand befanden, in welchem sie üblicherweise in Getreidekulturen mit Herbiziden bekämpft werden, wurden die Wirkstoffkomponenten gemäß vorliegender Erfindung in verschiedenen Aufwandmengen allein und in Mischung auf Parzellen von jeweils 1 $m^2$ ausgespritzt. Die Verbindung O-[3-Phenyl-6-chlor-pyridazinyl-(4)]-S-(n-octyl)-thiocarbonat wurde dabei in folgender Zubereitung angewandt:

50 Gew.-% der jeweiligen Aktivsubstanz
2 Gew.-% Alkylarylsulfonsaures Na
4 Gew.-% Na-oleyl-methyl-taurid und
44 Gew.-% Kieselsäure

Die Verbindung 2-{[4-Chlor-6-(äthylamino)-s-triazin-2-yl]amino}-2-methyl-propionitril wurde in folgender Zubereitung angewandt:

50 Gew.-% Aktivsubstanz
40 Gew.-% Kaolin
10 Gew.-% Netz- und Dispergiermittel.

Nach 4 Wochen wurden die in den Parzellen noch verbliebenen Unkräuter, wiederum nach Arten getrennt, abgeerntet und das Frischgewicht festgestellt. In gleicher Weise wurde der Unkrautbesatz in den unbehandelten Kontrollparzellen gewichtsmäßig erfaßt. Die Restverunkrautung in den behandelten Parzellen wurde zur Verunkrautung in den unbehandelten Parzellen in Beziehung gesetzt und auf diese Weise der jeweilige herbizide Wirkungsgrad (% Abtötung) festgestellt. Diese Werte wurden dann im Falle der Produktmischung an Hand der Formel nach Limpel et al. auf etwaige synergistische Effekte hin untersucht.

Tabelle 1

Herbizider Wirkungsgrad (% Abtötung)

| | kg Wirkstoff/ha | Anthemis arvensis (Ackerhunds-kamille) gefunden | Galium aparine (Klettenlabkraut) gefunden | Stellaria media (Vogelmiere) gefunden |
|---|---|---|---|---|
| O-(3-Phenyl-6-chlor-pyridazinyl-4-)-(n-octyl)-thiocarbonat = I | 0,25 | 14 | 38 | 12 |
| | 0,50 | 44 | 66 | 60 |
| | 0,75 | 55 | 75 | 76 |
| | 1,00 | 70 | 91 | 82 |
| | 1,50 | 83 | 97 | 98 |
| 2-(4-chlor-6-äthylamino-s-triazin-2-yl-amino)-2-methyl-propionitril = II | 0,10 | 20 | 43 | 10 |
| | 0,20 | 43 | 70 | 35 |
| | 0,30 | 60 | 76 | 63 |
| | 0,40 | 78 | 79 | 78 |

Tabelle 2

Herbizider Wirkungsgrad (% Abtötung)

| | kg Wirkstoff/ha | Anthemis arvensis | | | Galium aparine | | | Stellaria media | | |
|---|---|---|---|---|---|---|---|---|---|---|
| | | gefunden | berechnet (E) | Differenz zwischen gefund. und berechn. | gefunden | berechnet (E) | Differenz zwischen gefund. und berechn. | gefunden | berechnet (E) | Differenz zwischen gefund. u. berechn. |
| I + II | 0,25 + 0,10 | 39 | 31 | + 8 | 80 | 65 | + 15 | 38 | 21 | + 17 |
| | + 0,20 | 58 | 64 | − 6 | 86 | 82 | + 4 | 72 | 43 | + 29 |
| | + 0,30 | 77 | 80 | − 3 | 91 | 85 | + 6 | 85 | 68 | + 17 |
| | + 0,40 | 91 | 92 | − 1 | 90 | 87 | + 3 | 100 | 81 | + 19 |
| I + II | 0,50 + 0,10 | 51 | 53 | − 2 | 89 | 81 | + 8 | 75 | 64 | + 11 |
| | + 0,20 | 68 | 68 | 0 | 95 | 90 | + 5 | 80 | 74 | + 6 |
| | + 0,30 | 84 | 78 | + 6 | 99 | 92 | + 7 | 94 | 85 | + 9 |
| | + 0,40 | 93 | 88 | + 5 | 99 | 93 | + 6 | 100 | 91 | + 9 |
| I + II | 0,75 + 0,10 | 60 | 64 | − 4 | 93 | 86 | + 7 | 88 | 79 | + 9 |
| | + 0,20 | 88 | 75 | + 7 | 99 | 93 | + 6 | 100 | 85 | + 15 |
| | + 0,30 | 94 | 82 | + 12 | 100 | 94 | + 6 | 100 | 91 | + 9 |
| | + 0,40 | 98 | 90 | + 8 | 100 | 95 | + 5 | 100 | 95 | + 5 |

Tabelle 3

Herbizider Wirkungsgrad (% Abtötung)

| | kg Wirkstoff/ha | Anthemis arvensis gefunden | Anthemis arvensis berechnet (E) | Anthemis arvensis Differenz zwischen gefund. und berechn. | Galium aparine gefunden | Galium aparine berechnet (E) | Galium aparine Differenz zwischen gefund. und berechn. | Stellaria media gefunden | Stellaria media berechnet (E) | Stellaria media Differenz zwischen gefund. u. berechn. |
|---|---|---|---|---|---|---|---|---|---|---|
| I + II | 1,0 + 0,1 | 88 | 76 | +12 | 97 | 95 | +2 | 95 | 84 | +11 |
| | + 0,2 | 99 | 83 | +16 | 99 | 98 | +1 | 100 | 89 | +11 |
| | + 0,3 | 96 | 88 | + 8 | 100 | 98 | +2 | 100 | 94 | + 6 |
| | + 0,4 | 100 | 93 | + 7 | 100 | 99 | +1 | 100 | 96 | + 4 |
| I + II | 1,5 + 0,1 | 96 | 86 | +10 | 100 | 98 | +2 | 100 | 99 | + 1 |
| | + 0,2 | 96 | 90 | + 6 | 100 | 99 | +1 | 100 | 100 | 0 |
| | + 0,3 | 100 | 93 | + 7 | 100 | 99 | +1 | 100 | 100 | 0 |
| | + 0,4 | 100 | 96 | + 4 | 100 | 99 | +1 | 100 | 100 | 0 |

Tabelle 4

E.W.R.C.-Bewertungsschema
(Europan Weed Research Council)

| Wertzahl | Abtötung von Unkräutern | Wirkung eines Präparates |
|---|---|---|
| 1 | 100% | ausgezeichnet |
| 2 | 97,5% | sehr gut |
| 3 | 95% | gut |
| 4 | 90% | befriedigend |
| 5 | 85% | noch ausreichend |
| 6 | 75% | nicht ausreichend |
| 7 | 65% | gering |
| 8 | 32,5% | sehr gering |
| 9 | 0 | keine |

**Patentansprüche**

1. Herbizides Mittel, dadurch gekennzeichnet, daß es als aktive Bestandteile eine oder mehrere Verbindungen der allgemeinen Formel

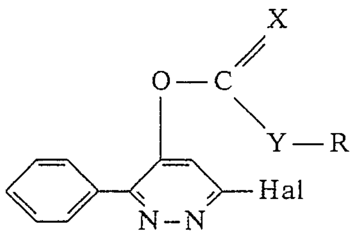

(I)

in der Hal ein Chlor- oder Bromatom, R einen geradkettigen oder verzweigten Alkylrest mit 1 bis 18 C-Atomen oder den Phenylrest, X ein Sauerstoff- oder Schwefelatom und Y ein Schwefelatom bedeutet, wobei im Falle, daß X ein S-Atom ist, Y auch Sauerstoff sein kann, in Mischung mit der Verbindung 2-{[4-Chlor-6-(äthylamino)-s-triazin-2-yl]amino}-2-methyl-propionitril enthält.

2. Herbizides Mittel gemäß Anspruch 1, dadurch gekennzeichnet, daß die Verbindung O-[3-Phenyl-6-chlor-pyridazinyl-(4)]-S-(n-ocytyl)-thiocarbonat in Kombination mit der Verbindung 2-{[4-Chlor-6-(äthylamino)-s-triazin-2-yl]amino}-2-methyl-propionitril angewandt wird.

3. Herbizides Mittel gemäß Anspruch 1 und 2, dadurch gekennzeichnet, daß das Mischungsverhältnis der Verbindung 2-{[4-Chlor-6-(äthylamino)-s-triazin-2-yl]amino}-2-methyl-propionitril mit der Verbindung O-[3-Phenyl-6-chlor-pyridazinyl-(4)]-S-(n-octyl)-thiocarbonat im Bereich von 1 : 0,6 bis 1 : 15 liegt.

4. Verfahren zur Bekämpfung von Unkräutern, dadurch gekennzeichnet, daß die Kulturen nach Auflauf der Pflanzen mit einer Mischung gemäß den Ansprüchen 1 bis 3 behandelt werden, wobei der Wirkstoff der allgemeinen Formel I in einer Aufwandmenge von 0,25 bis 1,5 kg/ha und der Wirkstoff 2-{[4-Chlor-6-(äthylamino)-s-triazin-2-yl]amino}-2-methyl-propionitril in einer Aufwandmenge von 0,1 bis 0,4 kg/ha gegeben wird.

5. Verfahren nach Anspruch 4 zur praktisch vollständigen Bekämpfung von Anthemis arvensis, Stellaria media und Galium aparine in Getreidekulturen, dadurch gekennzeichnet, daß der Wirkstoff der Formel I in einer Aufwandmenge von 0,5 bis 1,5 kg/ha und der Wirkstoff 2-{[4-Chlor-6-(äthylamino)-s-triazin-2-yl]amino}-2-methyl-propionitril in einer Aufwandmenge von 0,1 bis 0,4 kg/ha gegeben wird, wobei im Falle der Aufwandmenge von 0,5 bis 0,75 kg/ha des Wirkstoffes der Formel I mindestens 0,3 kg/ha des Wirkstoffes 2-{[4-Chlor-6-(äthylamino)-s-triazin-2-yl]amino}-2-methyl-propionitril zugegen sein müssen.

6. Verfahren nach Anspruch 5, dadurch gekennzeichnet, daß O-[3-Phenyl-6-chlor-pyridazinyl-(4)]-S-(n-octyl)-thiocarbonat in einer Menge von 1 kg/ha und 2-{[4-Chlor-6-(äthylamino)-s-triazin-2-yl]amino}-2-methyl-propionitril in einer Menge von 0,2 bis 0,3 kg/ha verwendet werden.

**Claims**

1. Herbicidal agent, characterised in that it contains, as active constituents, one or more compounds of the general formula

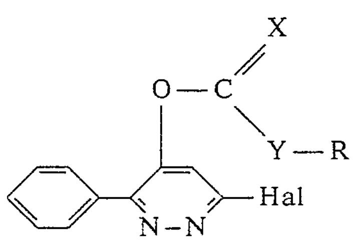

(I)

in which Hal denotes a chlorine or bromine atom, R denotes a straight-chain or branched alkyl radical with 1 to 18 C atoms or the phenyl radical, X denotes an oxygen or sulfur atom and Y denotes a sulfur atom, and, in the case where X is a S atom, Y can also be oxygen, mixed with the compound 2-{[4-chloro-6-(ethylamino)-s-triazin-2-yl]amino}-2-methyl-propionitrile.

2. Herbicidal agent according to Claim 1, characterised in that the compound O-[3-phenyl-6-chloropyridazin-4-yl] S-(n-octyl) thiocarbonate is used in combination with the compound 2-{[4-chloro-6-(ethylamino)-s-triazin-2-yl]amino}-2-methyl-propionitrile.

3. Herbicidal agent according to Claim 1 and 2, characterised in that the ratio of the compound

2-{[4-chloro-6-(ethylamino)-s-triazin-2-yl]amino}-2-methyl-propionitrile to the compound O-[3-phenyl-6-chloro-pyridazin-4-yl] S-(n-octyl) thiocarbonate in the mixture is in the range from 1 : 0.6 to 1 : 15.

4. Process for combating weeds, characterised in that, after emergence of the plants, the crops are treated with a mixture according to Claims 1 to 3, the active compound of the general formula I being applied in an amount of 0.25 to 1.5 kg/ha and the active compound 2-{[4-chloro-6-(ethylamino)-s-triazin-2-yl]amino}-2-methyl-propionitrile being applied in an amount of 0.1 to 0.4 kg/ha

5. Process according to Claim 4 for combating Anthemis arvensis, Stellaria media and Galium aparine virtually completely in cereal crops, characterised in that the active compound of the formula I is applied in an amount of 0.5 to 1.5 kg/ha and the active compound 2-{[4-chloro-6-(ethylamino)-s-triazin-2-yl]amino}-2-methyl-propionitrile is applied in an amount of 0.1 to 0.4 kg/ha, and in cases where the active compound of the formula I is applied in an amount of 0.5 to 0.75 kg/ha, the active compound 2-{[4-chloro-6-(ethylamino)-s-triazin-2-yl]amino}-2-methyl-propionitrile must be present in an amount of at least 0.3 kg/ha.

6. Process according to Claim 5, characterised in that O-[3-phenyl-6-chloro-pyridazin-4-yl]-S-(n-octyl) thiocarbonate is used in an amount of 1 kg/ha and 2-{[4-chloro-6-(ethylamino)-s-triazin-2-yl]amino}-2-methyl-propionitrile is used in an amount of 0.2 to 0.3 kg/ha.

**Revendications**

1. Composition herbicide caractérisée en ce qu'elle renferme, comme constituants actifs, un ou plusieurs composés de formule générale:

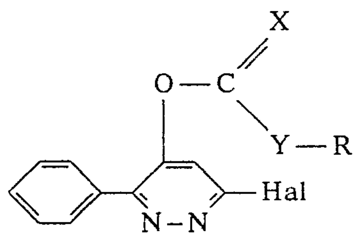

(I)

dans laquelle Hal est un atome de chlore ou de brome, R est un radical alcoyle linéaire ou ramifié ayant de 1 à 18 atomes de carbone ou bien le radical phényle, X est un atome d'oxygène ou de soufre et Y est un atome de soufre, et dans le cas où X est un atome de soufre Y peut également être un atome d'oxygène, en mélange avec le composé 2-{[4-chloro-6-(éthylamino)-s-triazin-2-yl]amino}-2-méthyl-propionitrile.

2. Composition herbicide suivant la revendication 1, caractérisée en ce qu'on utilise le composé thiocarbonate d'O-[3-phényl-6-chloro-pyridazinyl-(4)]-S-(n-octyle) en combinaison avec le composé 2-{[4-chloro-6-(éthylamino)-s-triazin-2-yl]amino}-2-méthyl-propionitrile.

3. Composition herbicide suivant la revendication 1 ou 2, caractérisée en ce que le rapport de mélange entre le composé 2-{[4-chloro-6-(éthylamino)-s-triazin-2-yl]amino}-2-méthyl-propionitrile et le composé thiocarbonate d'O-[3-phényl-6-chloro-pyridazinyl-(4)]-S-(n-octyle) est compris entre 1 : 0,6 et 1 : 15.

4. Procédé pour la lutte contre les mauvaises herbes, caractérisé en ce qu'on traite les cultures, après germination des plantes, avec un mélange suivant l'une quelconque des revendications 1 à 3, dans lequel la substance active de formule générale I est utilisée selon une quantité de 0,25 à 1,5 kg/hectare, et la substance active 2-{[4-chloro-6-(éthylamino)-s-triazin-2-yl]amino}-2-méthyl-propionitrile est utilisée selon une quantité de 0,1 à 0,4 kg/hectare.

5. Procédé suivant la revendication 4 pour la destruction pratiquement complète d'Anthemis arvensis, de Stellaria media et de Galium aparine dans les cultures de céréales, caractérisé en ce qu'on utilise la substance active de formule I selon une quantité allant de 0,5 à 1,5 kg/hectare et la substance active 2-{[4-chloro-6-(éthylamino)-s-triazin-2-yl]amino}-2-méthyl-propionitrile selon une quantité allant de 0,1 à 0,4 kg/hectare, et dans le cas où la quantité de substance active de formule I utilisée est comprise entre 0,5 et 0,75 kg/hectare, on ajoute alors au moins 0,3 kg/hectare de substance active 2-{[4-chloro-6-(éthylamino)-s-triazin-2-yl]amino}-2-méthyl-propionitrile.

6. Procédé suivant la revendication 5, caractérisé en ce qu'on utilise le thiocarbonate d'O-[3-phényl-6-chloro-pyridazinyl-(4)]-S-(n-octyle) selon une quantité de 1 kg/hectare et le 2-{[4-chloro-6-(éthylamino)-s-triazin-2-yl]amino}-2-méthyl-propionitrile selon une quantité allant de 0,2 à 0,3 kg/hectare.